# EUROPEAN PATENT APPLICATION

(11) **EP 4 832 115 A1**
(43) Date of publication of application: **28.10.2026**
(21) Application number: 24907230.7
(22) Date of filing: 09.12.2024
(51) Int. Cl.: H01M 4/62, C08F 212/06, C08F 220/10, H01M 4/13, H01M 4/139

(54) **ELECTRODE BINDER POLYMER, ELECTRODE BINDER, ELECTRODE BINDER COMPOSITION, ELECTRODE SLURRY, ELECTRODE, SECONDARY BATTERY, PRODUCTION METHOD FOR ELECTRODE BINDER POLYMER, PRODUCTION METHOD FOR ELECTRODE BINDER, PRODUCTION METHOD FOR ELECTRODE BINDER COMPOSITION, PRODUCTION METHOD FOR ELECTRODE SLURRY, AND PRODUCTION METHOD FOR ELECTRODE**

(30) Priority: 19.12.2023 JP 2023214286; 25.10.2024 JP 2024188626; 25.10.2024 JP 2024188627
(71) Applicant: Resonac Corporation, Tokyo 105-7325 (JP)
(72) Inventor: NAKAYAMA, Keito, Tokyo 105-7325 (JP); KONNO, Kaoru, Tokyo 105-7325 (JP); KAWAHARA, Yuta, Tokyo 105-7325 (JP); IKEHATA, Ryohsuke, Tokyo 105-7325 (JP); IIZUKA, Tatsuya, Tokyo 105-7325 (JP); HORIKOSHI, Hideo, Tokyo 105-7325 (JP)
(74) Representative: Berggren Oy
(86) International application number: PCT/JP2024/043486
(87) International publication number: WO 2025/134845

(57) **Abstract**

An electrode binder polymer has: a first functional group which is at least one selected from the group consisting of a carboxy group and a carboxy group forming a salt; and a second functional group which is at least one selected from the group consisting of an isocyanato group and a blocked isocyanato group, and has a glass transition point Tg of -3°C or higher.

## Description

### [Technical Field]

The present disclosure relates to an electrode binder polymer, an electrode binder, an electrode binder composition, an electrode slurry, an electrode, a secondary battery, a method for manufacturing an electrode binder polymer, a method for manufacturing an electrode binder, a method for manufacturing an electrode binder composition, a method for manufacturing an electrode slurry, and a method for manufacturing an electrode.

### [Background Art]

Secondary batteries can be reduced in size and weight, and hence have been widely used as power supplies for notebook personal computers, mobile phones, power tools, electronic communication equipment, and the like. In recent years, secondary batteries have also been used as power supplies for electric vehicles and hybrid vehicles, and the like. A typical example of a secondary battery includes a lithium ion secondary battery.

A secondary battery includes a positive electrode including a metal oxide, or the like as an active material, a negative electrode including a carbon material such as graphite as an active material, and an electrolytic solution. The positive electrode and the negative electrode include a current collector and an electrode active material layer formed on the current collector. The electrode active material layer usually contains a binder, and by means of the binder, the active materials are bound together, and the active material and the current collector are bound together. Examples of binders for use in the secondary battery may include those described in PTL1 and PTL 2.

PTL 1 discloses a secondary battery electrode including 100 parts by mass of at least one polymer selected from the group consisting of a styrene-butadiene copolymer and a copolymer resulting from a (meth)acrylic acid ester and a vinyl monomer having an acid component; and 1 to 20 parts by mass of at least one nonionic surfactant selected from the group consisting of polyoxyethylene alkyl ether derivatives, polyoxyethylene-polyoxypropylene condensates and polyoxyethylene-polyoxypropylene alkyl ether derivatives, having a cloudy point of 70°C or lower.

PTL 2 discloses a binder for a lithium ion secondary battery electrode, having a glass transition temperature of 30°C or lower, obtained by emulsion polymerization of 15 to 70 mass% of an ethylenically unsaturated monomer including styrene, an ethylenically unsaturated carboxylic acid ester, an ethylenically unsaturated carboxylic acid, and an internal crosslinking agent as essential components on the basis of the total amount of the ethylenically unsaturated monomers in the presence of a surfactant.

Furthermore, PTL 3 discloses a binder for an electrode, including a polymer having a structural unit derived from an alkyl (meth)acrylate ester monomer, a structural unit derived from a specific structural monomer having an aromatic group, and a structural unit derived from a monomer having at least one selected from the group consisting of an epoxy group, a (blocked) isocyanate group, and an urethane group.

### [Citation List]

### [Patent Literature]

[PTL 1] Japanese Patent Application Publication No. 2014-239070
[PTL 2] Japanese Patent Application Publication No. 2011-243464
[PTL 3] WO 2023/053863

### [Summary of Invention]

### [Technical Problem]

In recent years, secondary batteries have been required to maintain their battery performances sufficiently, even when they are exposed to high-temperature environment for a long time, namely, to have excellent high-temperature storability.

Thus, it is an object of the present disclosure to provide an electrode binder polymer, an electrode binder, an electrode binder composition, an electrode slurry, and an electrode capable of obtaining a secondary battery having excellent high-temperature storability.

Further, it is another object of the present disclosure to provide a secondary battery having excellent high-temperature storability.

Furthermore, it is a still other object of the present disclosure to provide respective methods for manufacturing the electrode binder polymer, the electrode binder, the electrode binder composition, the electrode slurry and the electrode.

### [Solution to Problem]

The present disclosure includes the following aspects.
<1> An electrode binder polymer having a first functional group which is at least one selected from the group consisting of a carboxy group and a carboxy group forming a salt, and a second functional group which is at least one selected from the group consisting of an isocyanato group and a blocked isocyanato group, and having a glass transition point Tg of -3°C or higher.
<2> The electrode binder polymer according to <1>, in which the glass transition point Tg is 50°C or lower.
<3> The electrode binder polymer according to <1> or <2>, in which the content F1 of the first functional groups is 0.20 mmol/g to 5.0 mmol/g.
<4> The electrode binder polymer according to any one of <1> to <3>, in which the content F2 of the second functional groups is 0.020 mmol/g to 2.0 mmol/g.
<5> The electrode binder polymer according to any one of <1> to <4>, in which the value of the ratio F2/F1 of the content F2 of the second functional groups to the content F1 of the first functional groups is 0.020 to 2.0.
<6> The electrode binder polymer according to any one of <1> to <5>, having dispersibility in water.
<7> An electrode binder including the electrode binder polymer according to any one of <1> to <6>.
<8> An electrode binder composition including the electrode binder polymer according to any one of <1> to <6>, and an aqueous medium.
<9> An electrode slurry including the electrode binder polymer according to any one of <1> to <6>, an aqueous medium, and an electrode active material.
<10> An electrode having a current collector; and
   an electrode active material layer including the electrode binder polymer according to any one of <1> to <6>.
<11> A secondary battery including the electrode according to <10>.
<12> A method for manufacturing the electrode binder polymer according to any one of <1> to <6>,
   the method including performing copolymerization using a compound having the first functional group and an ethylenically unsaturated bond, and a compound having the second functional group and an ethylenically unsaturated bond.
<13> A method for manufacturing an electrode binder including mixing the electrode binder polymer according to any one of <1> to <6>.
<14> A method for manufacturing an electrode binder composition including mixing the electrode binder polymer according to any one of <1> to <6> and an aqueous medium, or mixing the electrode binder according to <7> and an aqueous medium.
<15> A method for manufacturing an electrode slurry including mixing the electrode binder polymer according to any one of <1> to <6>, an electrode active material, and an aqueous medium, mixing the electrode binder according to <7>, an electrode active material, and an aqueous medium, or mixing the electrode binder composition according to <8> and an electrode active material.
<16> A method for manufacturing an electrode, including applying the electrode slurry according to <9> to at least a portion of a surface of a current collector for drying.

### [Advantageous Effects of Invention]

The present disclosure can provide an electrode binder polymer, an electrode binder, an electrode binder composition, an electrode slurry, and an electrode, capable of obtaining a secondary battery having excellent high-temperature storability.

Further, the present disclosure can also provide a secondary battery having excellent high-temperature storability.

Furthermore, the present disclosure can provide respective manufacturing methods of the electrode binder polymer, the electrode binder, the electrode binder composition, the electrode slurry, and the electrode.

### [Description of Embodiments]

Hereinafter, embodiments will be described in detail. However, the present disclosure is not limited to the following embodiments. In the following embodiments, the constituent elements (including elemental steps, etc.) are not essential, unless otherwise specified. The same also applies to numerical values and ranges thereof and are not intended to limit the present disclosure.

In the numerical ranges shown with "to" in the present disclosure, the numerical values listed before and after "to" are included as minimum and maximum values, respectively. "A or more" in a numerical range means A and a range more than A. "A or less" in a numerical range means A and a range less than A. In the numerical ranges stated in stages in the present disclosure, the upper limit value or the lower limit value stated within one numerical range may be replaced with the upper limit value or the lower limit value of the numerical range stated in other stages. In addition, in the numerical range described in the present disclosure, the upper limit value or the lower limit value of the numerical range may be replaced with the values shown in Examples.

In the present disclosure, each component may contain a plurality of types of the corresponding substances unless otherwise specified. When a plurality of substances corresponding to respective components are present in the composition, or the like, the content ratio or content of each component means the total content ratio or content of the plurality of substances present in the composition, or the like, unless otherwise specified.

The term "layer" in the present disclosure also includes, in addition to the case where, when a region including the layer present therein is observed, the layer is formed over the entire region, the case where the layer is formed only on a part of the region.

In the present disclosure, the term "(meth)acrylic" is a generic name for acrylic and methacrylic. The "(meth)acrylates" is a generic name for acrylates and methacrylates.

In the present disclosure, the term "ethylenically unsaturated bond" refers to an ethylenically unsaturated bond having a radical polymerizability, unless otherwise specified.

### <Electrode binder polymer>

The electrode binder polymer of the present disclosure has a first functional group which is at least one selected from the group consisting of a carboxy group and a carboxy group forming a salt, and a second functional group which is at least one selected from the group consisting of an isocyanato group and a blocked isocyanato group, and has a glass transition point Tg of -3°C or higher.

A secondary battery excellent in high-temperature storability can be obtained by using the electrode binder polymer having the above-described configuration. The reason for this is not clear, but it can be presumed as follows.

In the case of the isocyanato group or a blocked isocyanato group present as the second functional group in the electrode binder polymer, it is considered that the isocyanato group generated by heating, voltage application, a chemical reaction, or the like, generates active species by an oxidation-reduction reaction at the time of charging and discharging in the electrode. It is considered that the electrode binder polymer strongly protects the surface of the electrode active material due to the reaction between the active species and at least one of the electrolytic solution, and the coating (SEI, Solid Electrolyte Interphase) generated on the surface of the electrode active material by oxidation-reduction of the electrolytic solution. The surface of the electrode active material, which is strongly protected by the electrode binder polymer has excellent durability at temperatures as high as 60°C. This conceivably suppresses undesired decomposition reactions of the electrolytic solution and the electrolyte which are generated on the surface of the electrode active material during the high-temperature storage, resulting in an improvement of the high-temperature storability.

Further, it is considered that the carboxy group and the carboxy group forming a salt present as a first functional group in the electrode binder polymer improve the binding property to the current collector, so that the high-temperature storability is improved.

Furthermore, when the glass transition point of the electrode binder polymer is -3°C or higher, it is considered that the film breaking strength of the electrode binder polymer is improved, and an increase in the electrode resistance after the electrode including the electrode binder polymer is placed under high temperature environment is suppressed, synergistically with the fact that the electrode binder polymer contains the first functional group and the second functional group.

The content F1 of the first functional group in the electrode binder polymer of the present disclosure is preferably 0.20 mmol/g or more, more preferably 0.50 mmol/g or more, and further preferably 0.70 mmol/g or more. This is because the content F1 within the above-described range more suppresses peeling of the electrode active material layer from the current collector. In addition, this is because the content F1 within the above-described range improves the polymerization stability for manufacturing the electrode binder polymer, which can provide a high-quality electrode binder polymer at a low cost.

The content F1 of the first functional groups in the electrode binder polymer of the present disclosure is preferably 5.0 mmol/g or less, more preferably 3.0 mmol/g or less, further preferably 1.5 mmol/g or less, and particularly preferably 1.0 mmol/g or less from the viewpoint of ensuring polymerization stability for manufacturing the present binder polymer.

The content F1 of the first functional groups in the electrode binder polymer of the present disclosure may be 0.20 mmol/g to 5.0 mmol/g, may be 0.50 mmol/g to 3.0 mmol/g, may be 0.70 mmol/g to 1.5 mmol/g, and may be 0.70 mmol/g to 1.0 mmol/g.

The content F1 [mmol/g] of the first functional groups is determined by the following method. 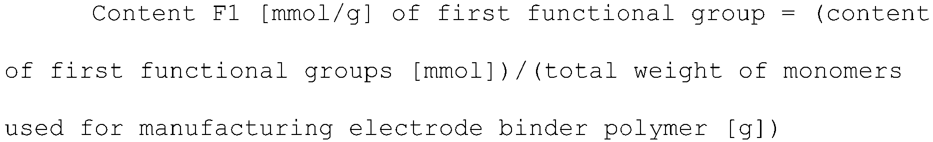 Content F1 [mmol/g] of first functional group = (content of first functional groups [mmol])/(total weight of monomers used for manufacturing electrode binder polymer [g])

In the formula, "content of first functional groups [mmol]" is defined as the total sum obtained by adding (a substance amount (mmol) of a monomer having a first functional group) × (the number of the first functional groups possessed by one monomer having the first functional group) to all monomers having the first functional groups included in the electrode binder polymer.

The content F2 of the second functional groups in the electrode binder polymer of the present disclosure is preferably 0.020 mmol/g or more, more preferably 0.050 mmol/g or more, and further preferably 0.070 mmol/g or more. This is because the content F2 within the above range still further improves the high-temperature storability of the electrodes containing the electrode binder polymer.

The content F2 of the second functional groups in the electrode binder polymer of the present disclosure is preferably 2.0 mmol/g or less, more preferably 1.0 mmol/g or less, further preferably 0.60 mmol/g or less, and particularly preferably 0.10 mmol/g or less. This is because, in the case of the above-mentioned range, the yield is improved due to the improvement of the polymerization stability at the time of manufacturing the electrode binder polymer, which can reduce the manufacturing cost of the electrode binder polymer.

The content F2 of the second functional groups in the electrode binder polymer of the present disclosure may be 0.020 mmol/g to 2.0 mmol/g, may be 0.050 mmol/g to 1.0 mmol/g, may be 0.070 mmol/g to 0.60 mmol/g, and may be 0.070 mmol/g to 0.10 mmol/g.

The content F2 [mmol/g] of the second functional groups is determined by the following method. 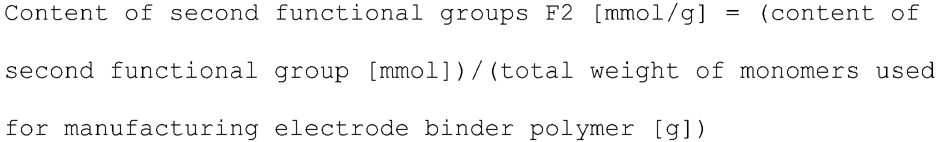 Content of second functional groups F2 [mmol/g] = (content of second functional group [mmol])/(total weight of monomers used for manufacturing electrode binder polymer [g])

In the formula, the term "content of second functional groups [mmol]" is the total sum obtained by adding (substance amount (mmol) of a monomer having a second functional group) × (number of second functional groups possessed by one monomer having a second functional group) to all monomers having a second functional group contained in the electrode binder polymer.

In the electrode binder polymer of the present disclosure, from the viewpoint of improving the high-temperature storability of the battery using an electrode including the electrode binder polymer, the value of the ratio F2/F1 of the content F2 of the second functional groups to the content F1 of the first functional groups is preferably 0.020 or more, more preferably 0.050 or more, further preferably 0.070 or more, and particularly preferably 0.082 or more.

In the electrode binder polymer of the present disclosure, from the viewpoint of ensuring the polymerization stability for manufacturing the electrode binder polymer, the value of the ratio F2/F1 of the content F2 of the second functional groups to the content F1 of the first functional groups is preferably 2.0 or less, more preferably 1.0 or less, further preferably 0.60 or less, and particularly preferably 0.10 or less.

In the electrode binder polymer of the present disclosure, the value of the ratio F2/F1 of the content F2 of the second functional groups to the content F1 of the first functional groups may be 0.020 to 2.0, may be 0.050 to 1.0, may be 0.082 to 0.60, and may be 0.082 to 0.10.

In the present disclosure, the carboxy group forming a salt refers to a group in which the carboxy group forms a salt with a basic substance.

In the present disclosure, the blocked isocyanato group indicates a functional group resulting from bonding between the isocyanato group and a blocking agent. Preferably, the blocked isocyanato group is of a structure capable of controlling the conversion into an isocyanato group.

The blocked isocyanato group is preferably of a structure to generate an isocyanato group by external stimulation, a chemical reaction, or the like, and is more preferably of a structure generating an isocyanato group by at least one selected from the group consisting of heating, voltage application, and a chemical reaction. The conversion of the blocked isocyanato groups to isocyanato groups can be caused by elimination of a blocking agent by an oxidation-reduction reaction due to a reaction by heating, chemical reaction with Lewis acid, Bronsted acid, or the like, an electrochemical reaction by voltage application, or the like.

As the blocking agent, mention may be made of methyl salicylate, 3,5-dimethylpyrazole, 2-butanone=oxime (methyl ethyl ketoxime), ε-caprolactam, 1-methoxy-2-propanol, or the like. From the viewpoint of easy elimination, the blocking agent preferably includes at least one selected from the group consisting of methyl salicylate, 3,5-dimethylpyrazole and 2-butanone=oxime.

The fact that the electrode binder polymer has the first functional group can be confirmed by quantitatively determining the amount of a carboxyl group or a carboxylate salt present by Infrared spectroscopy (IR), nuclear magnetic resonance spectroscopy (NMR) or the like.

Further, the fact that the electrode binder polymer has the second functional group can be confirmed by quantitatively determining the amount of the blocking agent bonded to the isocyanato group or the block isocyanato group by Infrared spectroscopy (IR), nuclear magnetic resonance spectroscopy (NMR) or the like.

The glass transition point Tg of the electrode binder polymer of the present disclosure is -3°C or higher, preferably 0°C or higher, and more preferably 5°C or higher. This is due to the following: when the glass transition point Tg is in the above range, the breaking strength of the film of the electrode binder polymer is improved, and an increase in electrode resistance after the electrode containing the electrode binder polymer is placed under high temperature environment is suppressed.

From the viewpoint of ensuring the electrode peeling strength of the electrode including the electrode binder polymer, the glass transition point Tg of the electrode binder polymer of the present disclosure is preferably 50°C or lower, more preferably 30°C or lower, further preferably 20°C or lower, and particularly preferably 10°C or lower.

The glass transition point Tg of the electrode binder polymer of the present disclosure may be -3°C to 50°C, may be 0°C to 30°C, may be 5°C to 20°C, and may be 5°C to 10°C.

The glass transition point Tg of the binder polymer (P) is the peak top temperature of the chart obtained as temperature differential by performing the measurement at a heating rate of 10°C/min, under a nitrogen gas atmosphere using a differential scanning calorimetry (DSC) apparatus (for example, EXSTAR DSC/SS7020 manufactured by Hitachi High-Tech Science, Ltd.).

The electrode binder polymer of the present disclosure preferably has dispersibility in water. "Having dispersibility in water" means that the electrode binder polymer continues to exist in water without coagulation and sedimentation. For example, it can be confirmed by visual confirmation of sedimentation, measurement of the concentration gradient in the height direction in the vessel, and the measurement of the particle size by Dynamic Light Scattering method (DLS).

The solubility of the electrode binder polymer in 25°C water is preferably 1.0 g/100 g H₂O, or less, more preferably 0.50 g/100 g H₂O, or less, and further preferably 0.30 g/100 g H₂O, or less. When the solubility is in the above range, it is possible to suppress an increase in viscosity for an electrode binder composition including the electrode binder polymer of the present disclosure and an aqueous medium. Further, when the solubility falls within the above range, the electrode binder polymer is present in the form of particles in the electrode manufactured by using the electrode binder composition containing the electrode binder polymer of the present disclosure. As a result of this, an electrolytic solution becomes more likely to permeate among the particles, and the electrode resistance tends to decrease.

### <Structural example of electrode binder polymer>

The electrode binder polymer of the present disclosure has no particular restriction on the skeleton thereof, so long as it has a first functional group and a second functional group. For example, the electrode binder polymer may include a structural unit having a first functional group and a structural unit having a second functional group. Hereinafter, the structural unit having a first functional group will also be referred to as a first structural unit, and the structural unit having a second functional group will also be referred to as a second structural unit.

The electrode binder polymer of the present disclosure may further include one or more other structural units corresponding to none of the first structural unit and the second structural unit. As the other structural units, mention may be made of a third structural unit derived from an aromatic hydrocarbon monomer, a fourth structural unit derived from a nonionic monomer, and a fifth structural unit derived from a multifunctional monomer.

Each monomer may have an ethylenically unsaturated bond. In the present disclosure, the term "ethylenically unsaturated bond" refers to an ethylenically unsaturated bond having a radical polymerizability, unless otherwise specified. When each monomer has an ethylenically unsaturated bond, the structural units contained in the polymer are bonded to each other by a polymerization reaction of ethylenically unsaturated bonds possessed by the respective monomers. In this case, the structural units contained in the polymer are covalently bonded together unless otherwise specified.

Note that, in the case of a polymer having a structural unit A derived from a compound A having an ethylenically unsaturated bond, as an example, the chemical structure of the portion other than the portion corresponding to the ethylenically unsaturated bond of the compound A in the structural unit A of the polymer is the same as the chemical structure of the portion other than the ethylenically unsaturated bond of the compound A before polymerization. For example, the structural unit derived from styrene has the structure of "-CH₂CH(C₆H₅ (phenyl group))-" in the electrode binder polymer.

When each monomer has an ethylenically unsaturated bond, the monomer from which a certain structural unit in a polymer is derived refers to a compound having a structure in which, in the structural unit, bonds between two carbon atoms forming the main chain of the polymer are replaced with ethylenically unsaturated bonds for separation from other structural units.

Further, when the portion other than the main chain structure corresponding to an ethylenically unsaturated bond in a polymer, for example, the structure of a functional group such as a carboxy group, is changed by a chemical reaction, or the like, the structural units are classified on the basis of the chemical structure after change. For example, when vinyl acetate is polymerized and then is saponified, the structural unit is not referred to as a structural unit derived from vinyl acetate, but as a structural unit derived from vinyl alcohol. For example, when ion exchange is carried out after performing polymerization of monomers having an ionic functional group, the structural units are classified on the basis of the chemical structure after ion exchange. Specifically, for example, when the corresponding structural unit is set to "-CH₂CH(COOH)-" by ion exchange after the polymerization of sodium acrylate, the structural unit is referred to not as a structural unit derived from sodium acrylate, but as a structural unit derived from an acrylic acid.

### [First structural unit]

The first structural unit has at least one selected from the group consisting of a carboxy group and a carboxy group forming a salt of a first functional group.

In the electrode binder polymer, the first structural units may be included singly alone, or may be included two or more thereof.

The first structural unit may have one carboxy group or two or more carboxy groups in one structural unit. The first structural unit may have one carboxyl group forming a salt or two or more carboxyl groups forming a salt in one structural unit. In the first structural unit, the total number of carboxy groups and carboxy groups forming salts contained in one structural unit is preferably 1 to 4, and more preferably 1 to 2.

As the carboxylic acid monomers from which the first structural unit is derived, mention may be made of unsaturated monocarboxylic acids such as methacrylic acid, acrylic acid, and crotonic acid; unsaturated dicarboxylic acids such as itaconic acid and fumaric acid; and the like. From the viewpoint of suppressing the peeling of the electrode active material layer from the current collector, the carboxylic acid monomer preferably contains at least one selected from the group consisting of acrylic acid, methacrylic acid, and itaconic acid.

The proportion of the structural units derived from acrylic acid, methacrylic acid, and itaconic acid (when two or more types are included, the total proportion of the structural units derived therefrom) in the first structural unit is preferably 80 mol% or more, and may be 90 mol% or more, and may be 100 mol%.

Further, the carboxylic acid monomer may contain both of an unsaturated monocarboxylic acid and an unsaturated dicarboxylic acid from the viewpoint of improving the adhesion between the binder polymer and an active material or a current collector. When the carboxylic acid monomer includes both of an unsaturated monocarboxylic acid and an unsaturated dicarboxylic acid, the content ratio of the unsaturated dicarboxylic acid relative to the total amount of the unsaturated monocarboxylic acid and unsaturated dicarboxylic acid is preferably 1 mol% or more, more preferably 5 mol% or more, further preferably 10 mol% or more, and particularly preferably 15 mol% or more. Further, the content ratio of the unsaturated dicarboxylic acid relative to the total amount of the unsaturated monocarboxylic acid and the unsaturated dicarboxylic acid is preferably 70 mol% or less, more preferably 50 mol% or less, further preferably 40 mol% or less, and particularly preferably 30 mol% or less.

As the salt, mention may be made of a metal salt, an ammonium salt, and the like. Examples of the metal salt may include alkali metal salts such as a lithium salt, a sodium salt and a potassium salt.

### [Second structural unit]

The second structural unit has at least one selected from the group consisting of an isocyanato group and a blocked isocyanato group of the second functional group.

In the electrode binder polymer, the second structural units may be included singly alone or may be included two or more thereof.

As the isocyanate monomer from which the second structural unit is derived, mention may be made of compounds having a (meth)acryloyl group, a vinyl group or an allyl group, and from the viewpoint of the availability and the polymerization reactivity, a compound having a (meth)acryloyl group is preferable. The isocyanate monomer is preferably a compound having at least one selected from the group consisting of an isocyanato group and a blocked isocyanato group and a (meth)acryloyl group, and more preferably a (meth)acrylic acid ester having at least one selected from the group consisting of an isocyanato group and a blocked isocyanato group.

The proportion of the structural unit derived from a (meth)acrylic acid ester having at least one selected from the group consisting of an isocyanato group and a blocked isocyanato group in the second structural unit is preferably 80 mol% or more, may be 90 mol% or more, and may be 99 mol% or more.

In the total amount of the isocyanato groups and the blocked isocyanato groups possessed by the electrode binder polymer, the proportion occupied by the blocked isocyanato groups is preferably 50 mol% or more, may be 70 mol% or more, may be 90 mol% or more, and may be 100 mol%. A blocked isocyanato group tends to suppress the isocyanato group from being changed into an amino group by hydrolysis.

It should be noted that, although the case where the first functional group and the second functional group are respectively contained in separate structural units has been described as an example above, both of the first functional group and the second functional group may be included in one structural unit.

### [Third structural unit]

The third structural unit is a structural unit derived from an aromatic hydrocarbon monomer. When the electrode binder polymer has the third structural unit, the high-temperature storability of the battery using the electrode including the electrode binder polymer tends to be improved. In the electrode binder polymer, the third structural units may be included singly alone or may be included two or more thereof. The electrode binder polymer may not have the third structural unit.

Preferably, the aromatic hydrocarbon monomer has an ethylenically unsaturated bond, includes a hydrocarbon, and does not include atoms such as an oxygen atom. The third structural unit may have one aromatic ring, and may have two or more aromatic rings in one structural unit. In the third structural unit, the number of aromatic rings included in one structural unit is preferably 1 to 4, and more preferably 1. As the aromatic ring, mention may be made of a benzene ring which may have a substituent.

As aromatic hydrocarbon monomers, mention may be made of styrene, t-butylstyrene, α-methylstyrene, p-methylstyrene, 1,1-diphenylethylene, and the like.

### [Fourth structural unit]

The fourth structural unit is a structural unit derived from a nonionic monomer. When the electrode binder polymer contains the fourth structural unit, the flexibility and the electrode peeling strength of the electrode containing the electrode binder polymer tend to be improved. In the electrode binder polymer, the fourth structural units may be included singly alone or may be included two or more thereof. The electrode binder polymer may not have the fourth structural unit.

The nonionic monomer is preferably a nonionic (meth)acrylic acid ester having an ethylenically unsaturated bond and having none of an anionic functional group and a cationic functional group. The nonionic monomer preferably includes (meth)acrylic acid ester, and more preferably includes an alkyl (meth)acrylic acid ester.

The fourth structural unit may have a polar functional group. Polar functional groups include, but are not limited to, a hydroxy group, a cyano group, and the like. Incidentally, the hydroxy group as a polar functional group conceptually does not include an OH structure contained in an ionic functional group such as a carboxy group or a sulfo group (sulfonic acid group).

Examples of the nonionic monomers having polar functional groups may include 2-hydroxyethyl (meth)acrylate, 2-hydroxypropyl (meth)acrylate, and (meth)acrylonitrile.

### [Fifth structure unit]

The fifth structural unit is a structural unit derived from a multifunctional monomer. When the electrode binder polymer has the fifth structural unit, the electrolytic solution resistance tends to be improved. In the electrode binder polymer, the fifth structural units may be included singly alone or may be included two or more thereof. The electrode binder polymer may not have the fifth structural unit.

It is preferred that the multifunctional monomer is a compound having a plurality of independent ethylenically unsaturation bonds. The term "a plurality of independent ethylenically unsaturated bonds" as used herein means a plurality of ethylenically unsaturated bonds which do not form conjugated dienes with each other.

The fifth structural unit may have one or more ethylenically unsaturated bonds remaining in the structural unit. For example, in the case of a divinylbenzene polymer, a structural unit derived from divinylbenzene may be a structure having no ethylenically unsaturated bond (the form in which both of the portions corresponding to the two ethylenically unsaturated bonds of divinylbenzene are incorporated into the chain of the polymer) or may be a structure having one ethylenically unsaturated bond (only the portion corresponding to one ethylenically unsaturated bond is incorporated into the chain of the polymer).

### [Other structural units]

The electrode binder polymer may have other structural units corresponding to none of the first to fifth structural units.

Compounds from which other structural units are derived include, but are not limited to, compounds having one ethylenically unsaturated bond and having other anionic functional groups than carboxy groups such as a sulfo group and a phosphate group or salts thereof, surfactants having one ethylenically unsaturated bond (which may be hereinafter referred to as "polymerizable surfactants"), a compound having one ethylenically unsaturated bond and having a function as a silane coupling agent (which may be hereinafter referred to as a "polymerizable silane coupling agent"), and the like.

### [Content ratio each structural unit in electrode binder polymer]

The physical properties such as the glass transition point Tg of the electrode binder polymer, may be adjusted by adjusting the content ratio of the first to fifth structural units in the electrode binder polymer.

For example, the total content ratio of the first structural unit, the second structural unit, the third structural unit, and the fourth structural unit (hereinafter, "the first structural unit, the second structural unit, the third structural unit, and the fourth structural unit" may also be referred to as "first to fourth structural units") in the electrode binder polymer is preferably 90% by mass or more, more preferably 95% by mass or more, further preferably 97% by mass or more, may be 98% by mass or more, and may be 100% by mass. The total content ratio of the first to fourth structural units in the electrode binder polymer may be 99.5% by mass or less.

### <Method for manufacturing electrode binder polymer>

The manufacturing method of the electrode binder polymer is not particularly limited. For example, the electrode binder polymer can be synthesized by performing copolymerization (polymerization step) using a compound having a first functional group and an ethylenically unsaturated bond (also referred to as a "first monomer" hereinafter) and a compound having a second functional group and an ethylenically unsaturated bond (also referred to as a "second monomer" hereinafter). Further, copolymerization may be performed using at least one monomer selected from the group consisting of monomers for forming the third structural unit, monomers for forming the fourth structural unit, monomers for forming the fifth structural unit, and monomers for forming other structural units.

Examples of the method for copolymerizing respective monomers may include an emulsion polymerization method. As the emulsion polymerization method, common emulsion polymerization methods in which monomers are emulsion-polymerized in an aqueous medium can be applied.

The aqueous medium is preferably at least one selected from the group consisting of water and hydrophilic solvents. The hydrophilic solvents may be used singly alone, or may be used in combination of two or more thereof. The hydrophilic solvents include methanol, ethanol, isopropyl alcohol, N-methylpyrrolidone, and the like. The aqueous medium is preferably water from the viewpoint of the polymerization stability. As an aqueous medium, a mixture obtained by adding a hydrophilic solvent to water may be used.

### <Electrode binder>

The electrode binder of the present disclosure includes the electrode binder polymer of the present disclosure. The electrode binder of the present disclosure is preferably included in the electrodes of a non-aqueous secondary battery, more preferably included in the electrodes of a lithium ion secondary battery, and further preferably included in the negative electrode of a lithium ion secondary battery.

Incidentally, in the electrode binder, the functional group and the like included in the electrode binder polymer may react with other components to partially change the structure of the electrode binder polymer. In this case, the structure of the electrode binder polymer after reaction is also referred to as the electrode binder polymer. That is, in the electrode binder, the electrode binder polymer also includes the corresponding polymer and the structure obtained after the reaction between the polymer and the other components.

The electrode binder may include a polymer other than the electrode binder polymer, a surfactant, and the like. The electrode binder is obtained by mixing these components.

The electrode binder preferably includes a nonvolatile content in an electrode binder composition to be described later. The definition of the nonvolatile content in the electrode binder composition will be described later in the description of the electrode binder composition.

The content ratio of the electrode binder polymer included in the binder for a non-aqueous secondary battery is preferably 80% by mass or more, more preferably 90% by mass or more, further preferably 95% by mass or more, and still further preferably 98% by mass or more. This is because the effect due to the inclusion of the electrode binder polymer becomes remarkable.

### <Electrode binder composition>

The electrode binder composition of the present disclosure includes the electrode binder polymer of the present disclosure and an aqueous medium. The electrode binder composition of the present disclosure is preferably used for manufacturing of electrodes for non-aqueous secondary batteries, more preferably used for manufacturing of electrodes for lithium ion secondary batteries, and further preferably used for manufacturing of negative electrodes for lithium ion secondary batteries.

The electrode binder composition may be obtained by mixing the electrode binder polymer of the present disclosure and an aqueous medium, and may be obtained by mixing the electrode binder of the present disclosure and an aqueous medium.

Incidentally, in the electrode binder composition, the functional group, and the like included in the electrode binder polymer may react with other components to partially change the structure of the electrode binder polymer. In this case, the structure of the electrode binder polymer after reaction is also referred to as the electrode binder polymer. That is, in the electrode binder composition, the electrode binder polymer includes the corresponding polymer and the structure obtained after a reaction between the polymer and other components.

The electrode binder composition is preferably an emulsion in which particles containing the electrode binder polymer are dispersed in an aqueous medium. As the particles including the electrode binder polymer, mention may be made of particles including the electrode binder polymer, particles including the electrode binder polymer and a surfactant, particles further including other components, and the like. Further, the electrode binder composition may be configured such that particles including the electrode binder polymer and particles not including the electrode binder polymer (P) coexist.

The electrode binder composition may include other components together with the electrode binder polymer and the aqueous medium. Specifically, the electrode binder composition may include components used for the synthesis of the electrode binder polymer, and the like.

The electrode binder composition of the present disclosure may be a dispersion obtained by emulsion polymerization of an ethylenically unsaturated compound. Further, the electrode binder composition of the present disclosure may be a dispersion in which the electrode binder polymer obtained by a method other than emulsion polymerization is dispersed in an aqueous medium.

The aqueous medium in the electrode binder composition of the present disclosure is preferably at least one selected from the group consisting of water and a hydrophilic solvent. The solvents may be used singly alone or may be used in combination of two or more thereof. The aqueous medium preferably includes water, more preferably includes 50% by mass or more of water, further preferably includes 70% by mass or more of water, and particularly preferably includes 90% by mass or more of water.

The hydrophilic solvent may be the same as the hydrophilic solvent exemplified as the aqueous medium used for the synthesis of the electrode binder polymer. The aqueous medium may be the same as or may be different from the aqueous medium used for synthesizing the electrode binder polymer.

The nonvolatile content concentration in the binder composition of the present disclosure is preferably 20% by mass or more, more preferably 25% by mass or more, and further preferably 30% by mass or more from the viewpoint of increasing the amount of effective components included in the electrode binder composition. The nonvolatile content concentration of the electrode binder composition can be adjusted by the content of an aqueous medium included in the electrode binder composition.

The nonvolatile content concentration of the electrode binder composition is preferably 80% by mass or less, more preferably 70% by mass or less, and further preferably 60% by mass or less from the viewpoints of suppressing an increase in the viscosity of the electrode binder composition and facilitating manufacturing of an electrode slurry, which will be described later.

The "nonvolatile content" in the electrode binder composition is the component left as a solid or a liquid after drying the composition at 105°C for 1 hour while circulating the air in the dryer at 1 atmosphere (1013 hPa). The forms of the composition include, but are not limited to, a solution, a dispersion, and a slurry.

The nonvolatile content concentration in the binder composition is the mass ratio (mass%) of the mass of the components left as a solid or a liquid after weighing 1 g of the composition on an aluminum dish with a diameter of 5 cm and drying the composition at 105°C for 1 hour while circulating the air in the dryer at 1 atmosphere (1013 hPa) to the mass (1 g) of the composition before drying.

### <Electrode slurry>

The electrode slurry of the present disclosure includes the electrode binder polymer of the present disclosure, an aqueous medium, and an electrode active material. The electrode slurry of the present disclosure is preferably used for manufacturing of electrodes for non-aqueous secondary batteries, more preferably used for manufacturing of the electrodes for lithium ion secondary batteries, and further preferably used for manufacturing of the negative electrode for lithium ion secondary batteries.

The electrode slurry may be obtained by mixing the electrode binder polymer of the present disclosure, an electrode active material, and an aqueous medium, may be obtained by mixing the electrode binder of the present disclosure, an electrode active material, and an aqueous medium, and may be obtained by mixing the electrode binder composition of the present disclosure, and an electrode active material.

Incidentally, in the electrode slurry, the functional groups and the like contained in the electrode binder polymer may react with other components to partially change the structure of the electrode binder polymer. In this case, the structure of the electrode binder polymer after reaction is also referred to as the electrode binder polymer. In other words, in the electrode slurry, the electrode binder polymer includes the corresponding polymer and the structure of the polymer after the reaction between the polymer and other components.

The electrode binder polymer and the electrode active material contained in the electrode slurry are preferably dispersed in an aqueous medium. The electrode slurry may contain a thickener, a conductive auxiliary, the components used in the synthesis of the electrode binder polymer, and the like. The electrode slurry may contain a thickener, a conductive auxiliary, the components used in the synthesis of the electrode binder polymer, and the like.

The content of the electrode binder polymer included in the electrode slurry is preferably 0.50 parts by mass or more, and more preferably 1.0 part by mass or more, for every 100 parts by mass of the electrode active material. When the content of the electrode binder polymer is within the above range, the effect resulting from the inclusion of the electrode binder polymer tends to be exhibited still more sufficiently.

The content of the electrode binder polymer included in the electrode slurry is preferably 5.0 parts by mass or less, more preferably 4.0 parts by mass or less, and further preferably 3.0 parts by mass or less, for every 100 parts by mass of the electrode active material. When the content of the electrode binder polymer is within the above range, the content of the electrode active material contained in the electrode slurry can be increased, so that the electrode slurry tends to exhibit excellent charging-discharging characteristics.

The content of the electrode active material to be included in the electrode slurry is preferably 80 parts by mass or more, and more preferably 90 parts by mass or more for every 100 parts by mass of the electrode slurry. When the content of the electrode active material is within the above range, excellent charging-discharging characteristics tend to be exhibited.

The electrode active material contained in the electrode slurry is a material into and from which ions serving as charge carriers such as lithium ions can be intercalated and deintercalated. The ions serving as charge carriers are preferably alkali metal ions, more preferably lithium ions, sodium ions, or potassium ions, and further preferably lithium ions.

In the case where an electrode manufactured using an electrode slurry is a negative electrode, the electrode active material is the negative electrode active material. The negative electrode active material preferably includes at least one selected from the group consisting of a carbon material, a material containing silicon, and a material containing titanium. These materials used as the negative electrode active materials may be used singly alone, may be used in combination of two or more thereof, and may be used in a composite form.

Examples of the carbon material used as the negative electrode active material may include cokes such as petroleum coke, pitch coke, and coal coke, carbonized product of an organic polymer, and graphites such as artificial graphite and natural graphite. Examples of the material containing silicon, which is used as the negative electrode active material, may include silicon simple substance and silicon compounds such as silicon oxide. Examples of the material containing titanium, which is used as the negative electrode active material, may include lithium titanate.

Preferably, the negative electrode active material includes at least one selected from the group consisting of a carbon material and a material including silicon. When the negative electrode active material is the above-mentioned material, the effect of improving the binding property between the negative electrode active materials and between the negative electrode active material and the current collector due to the electrode binder polymer included in the electrode slurry tends to be increased.

In the case where an electrode manufactured using an electrode slurry is a positive electrode, the electrode active material is a positive electrode active material. As the positive electrode active material, a substance nobler in standard electrode potential than the negative electrode active material is used. Specifically, as the positive electrode active material, mention may be made of lithium composite oxides containing nickel such as lithium composite oxides of Ni-Co-Mn system, lithium composite oxides of Ni-Mn-Al system, and lithium composite oxides of Ni-Co-Al system, lithium cobalt oxide (LiCoO₂), spinel type lithium manganate (LiMn₂O₄), olivine type lithium iron phosphate, chalcogen compounds such as TiS₂, MnO₂, MoO₃, and V₂O₅, and the like. The substances used as the positive electrode active materials may be used singly alone, or may be used in combination of two or more thereof.

Preferably, the aqueous medium included in the electrode slurries of the present disclosure is one selected from the group consisting of water and hydrophilic solvents. As the hydrophilic solvent, mention may be made of the same as the hydrophilic solvent exemplified as the aqueous medium used for the synthesis of the electrode binder polymer. The aqueous medium contained in the electrode slurry may be the same as or may be different from the aqueous medium used for synthesizing the electrode binder polymer.

As the thickeners that can be included in the electrode slurry, mention may be made of cellulose derivatives such as carboxymethyl cellulose (CMC), hydroxyethyl cellulose, and hydroxypropyl cellulose, the ammonium salts of the cellulose derivatives, alkali metal salts of cellulose derivatives, polyvinyl alcohol, polyvinyl pyrrolidone, poly(meth)acrylates, poly(meth)acrylamides, poly(meth)N-hydroxyalkylacrylamide and the like. From the viewpoint of dispersibility of the electrode active material in the electrode slurry, it is preferable that the thickener includes at least one selected from the group consisting of carboxymethyl cellulose, the ammonium salt of carboxymethyl cellulose, and the alkali metal salt of carboxymethyl cellulose.

When the electrode slurry includes a thickener, the content of the thickener included in the electrode slurry is preferably 0.50 parts by mass or more, and more preferably 0.80 parts by mass or more for every 100 parts by mass of the electrode active material. When the content of the thickener is within the above range, the coatability of the electrode slurry tends to become favorable.

The content of the thickener included in the electrode slurry is preferably 3.0 parts by mass or less, more preferably 2.0 parts by mass or less, and further preferably 1.5 parts by mass or less for every 100 parts by mass of the electrode active material. The binding property between the electrode active materials included in the electrodes manufactured using the electrode slurry and between the electrode active material and the current collector tends to become favorable.

As the conductive auxiliary which can be contained in the electrode slurry, mention may be made of carbon black, carbon fiber, and the like. As carbon black, mention may be made of furnace black, acetylene black, Denka black (manufactured by Denka Corporation), and Ketchen black (manufactured by Ketchen Black International Corporation), or the like. As the carbon fibers, mention may be made of carbon nanotubes, carbon nanofibers, and the like. As the carbon nanotube, mention may be made of VGCF (manufactured by Resonac Corporation) which is a gas phase process carbon fiber.

As a method for manufacturing an electrode slurry of the present disclosure, for example, the electrode binder polymer of the present disclosure, an electrode active material, an aqueous medium, a thickener which is contained, if necessary, a conductive auxiliary which is contained, if necessary, and other components, which are contained if necessary, are mixed. The order of mixing respective components which are the raw materials for the electrode slurry is not particularly limited and can be appropriately determined. As a method for mixing the respective components, mention may be made of a method using a mixing device of a stirring type, a rotary type, a shaking type, or the like.

### <Electrode>

The electrode of the present disclosure has a current collector, and an electrode active material layer including an electrode active material and the electrode binder polymer of the present disclosure. As the shapes of the electrode, mention may be made of a laminate, a wound body, and the like, and the shape is not particularly limited. The electrode of the present disclosure is preferably an electrode of a non-aqueous secondary battery, more preferably an electrode of a lithium ion secondary battery, and further preferably a negative electrode of a lithium ion secondary battery.

Incidentally, in the electrode, the functional groups included in the electrode binder polymer, and the like may react to partially change the structure of the electrode binder polymer. In this case, the structure of the electrode binder polymer after the reaction is also referred to as the electrode binder polymer. That is, in the electrode, the electrode binder polymer includes the corresponding polymer and the structure of the polymer after the polymer has reacted and changed.

The forming range of the electrode active material layer on the current collector is not particularly limited, and the electrode active material layer may be formed on the entire surface of the current collector, or the electrode active material layer may be formed only on a partial surface on the current collector. When the current collector is in a shape of a plate, foil, or the like, the electrode active material layers may be formed on both sides of the current collector, or may be formed only on one side.

The current collector is preferably a metal sheet. As the metals forming the metal sheet, mention may be made of iron, copper, aluminum, nickel, stainless steel, and the like. When the electrode of the present disclosure is a negative electrode of a lithium ion secondary battery, the current collector is preferably copper foil.

The thickness of the metal sheet is not particularly limited, and is preferably 0.001 mm to 0.5 mm.

The electrode active material layer includes an electrode active material and the electrode binder polymer of the present disclosure. The electrode active material layer may contain a conductive auxiliary, a thickener or the like. As the electrode active material, the conductive auxiliary, and the thickener, the same ones as those exemplified as the components of the electrode slurry can be used.

The electrode of the present disclosure can be manufactured, for example, by the method described below. First, the electrode slurry of the present disclosure is applied to at least a portion of the surface of the current collector. Subsequently, the electrode slurry is dried to obtain an electrode sheet having an electrode active material layer formed on the collector. Thereafter, if necessary, the electrode sheet is cut into a size and a shape suitable for the size, the shape, and the like of the battery to obtain electrodes. Incidentally, when cutting is not necessary, the electrode sheet may be used as it is as an electrode.

The method for applying the electrode slurry onto a current collector is not particularly limited, and examples thereof may include a reverse roll method, a direct roll method, a doctor blade method, a knife method, an extrusion method, a curtain method, a gravure method, a bar method, a dip method, and a squeeze method. Among these application methods, in consideration of various physical properties such as the viscosity and the drying property of the electrode slurry, at least one method selected from the group consisting of a direct roll method, a doctor blade method, a knife method, and an extrusion method is preferably used. When these methods are applied, there is a tendency that an electrode active material layer having a smooth surface and a small thickness variation can be obtained.

The range in which the electrode slurry is applied onto the current collector is not particularly limited, and may be the entire surface of the current collector, or may be only a partial surface of the current collector. When the collector is in a form of a plate, foil, or the like, the electrode slurry may be applied onto both sides of the current collector, or may be applied onto only one side.

In the case where the electrode slurry is applied to both sides of the current collector, the slurry may be applied to one side at a time sequentially, or may be applied to both sides at a time. Further, the electrode slurry may be applied continuously or may be applied intermittently onto the current collector. The amount of the electrode slurry to be applied can be appropriately determined according to the designed capacity of the battery, the composition of the electrode slurry, or the like.

The method for drying the electrode slurry applied onto the current collector is not particularly limited. For example, hot air drying, low pressure drying, vacuum drying, (far) infrared drying, low-temperature air drying, or a combination thereof can be used.

The drying temperature and the drying time for drying the electrode slurry can be adjusted as appropriate depending on the concentration of the nonvolatile content in the electrode slurry, the application amount of the current collector, or the like. The drying temperature is preferably 40°C to 350°C, and from the viewpoint of the productivity, the drying temperature is more preferably 60°C to 100°C. The drying time is preferably 1 minute to 30 minutes.

The electrode sheet having the electrode active material layer formed on the current collector may be cut in order to have a suitable size and shape as an electrode. The method for cutting the electrode sheet is not particularly limited. Slits, laser, wire cut, cutter, Thomson or the like can be used.

In the present disclosure, the electrode sheet may be pressed, if necessary, before or after cutting the electrode sheet. As a result of this, the electrode active material can be more strongly bound to the current collector, and the non-aqueous secondary battery can be made smaller by reduction of the thickness of the electrode.

As the method of pressing the electrode sheet, common methods can be used. As the pressing method, it is particularly preferable to use a mold pressing method or a roll pressing method. When a mold pressing method is used, the pressing pressure is not particularly limited, and is preferably 0.5 t/cm² to 5 t/cm².

When a roll pressing method is used, the pressing load is not particularly limited, and is preferably set at 0.5 t/cm to 10 t/cm. When the pressing load is set within the above-mentioned range, the above-mentioned effects due to pressing are easily obtained, and the reduction of the intercalation and deintercalation capacity of charge carriers such as lithium ions into and from the electrode active material tends to be able to be suppressed.

### <Secondary battery>

The secondary battery of the present disclosure includes the electrode of the present disclosure. The secondary battery of the present disclosure is preferably a non-aqueous secondary battery, and more preferably a lithium ion secondary battery. In the following, a lithium ion secondary battery will be described as a preferred example of the secondary battery of the present disclosure. It should be noted that the configuration of the secondary battery of the present disclosure is not limited to the examples described below.

One example of a lithium ion secondary battery has a configuration in which a positive electrode, a negative electrode, and an electrolytic solution are accommodated in an exterior body. The lithium ion secondary battery may include, for example, a separator between a positive electrode and a negative electrode, or may include other members, other than the foregoing configuration. The shape of the lithium ion secondary battery may be any shape of a coin shape, a button shape, a sheet shape, a cylindrical shape, a rectangular shape, a flat shape, and the like.

For the lithium ion secondary batteries of one example of the present disclosure, one or both of the positive electrode and the negative electrode include the electrode binder polymer of the present disclosure. The electrode binder polymer is preferably included in the electrode active material layer of the electrode. It is preferable that at least one of the positive electrode active material layer and the negative electrode active material layer includes the electrode binder polymer, and it is more preferable that the negative electrode active material layer includes the electrode active binder polymer.

When in the lithium ion secondary battery of one example of the present disclosure, only one of the positive electrode active material layer and the negative electrode active material layer includes the electrode binder polymer of the present disclosure, the other electrode active material layer includes polyvinylidene fluoride or the like as a binder.

As the electrolytic solution, a non-aqueous liquid having ionic conductivity is preferably used. As the electrolytic solutions, mention may be made of a solution in which an electrolyte is dissolved in an organic solvent, an ionic liquid, and the like. From the viewpoint of obtaining a lithium ion secondary battery having a low manufacturing cost and a low internal resistance, the former is preferable.

As the electrolyte, an alkali metal salt can be used, and can be selected appropriately according to the kind of the electrode active material, and the like. As the electrolyte, mention may be made of LiClO₄, LiBF₆, LiPF₆, LiCF₃SO₃, LiCF₃CO₂ LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, aliphatic lithium carboxylate, or the like. Further, other alkali metal salts can be used as the electrolytes.

The organic solvents for dissolving the electrolyte are not particularly limited, and include carbonic acid ester compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), carboxylic acid esters such as ethyl acetate, propyl acetate, methyl propionate, ethyl propionate, and propyl propionate, and the like. The organic solvents may be used singly alone, or may be used in combination of two or more thereof. Of these, as the organic solvents, two or more kinds of linear carbonate type solvents are preferably used in combination.

The electrolytic solution may contain additives in addition to the above-mentioned components. Examples of the additives may include nitrile compounds, sulfur-containing compounds, and boron-containing compounds. As the nitrile compounds, mention may be made of succinonitrile, acetonitrile, and the like. As the sulfur-containing compounds, mention may be made of compounds having a sulfonyl group, a sulfonate group, a sultone structure, or the like such as methyl ethyl sulfone and 1,3-propanesultone. As the boron-containing compound, mention may be made of boric acid esters, or the like.

As the exterior body, the one formed with an aluminum laminate material including aluminum foil and a resin film or the like can be appropriately used, and the present invention is not limited thereto.

### [Examples]

Hereinafter, examples of embodiments of the present disclosure will be described in detail with reference to Examples, but the embodiments are not limited to these Examples.

In the following Examples, negative electrodes of lithium ion secondary batteries were manufactured as an example of the electrode for the electrode of the present disclosure, and lithium ion secondary batteries were manufactured as an example of the secondary batteries, which were compared with the negative electrodes of the lithium ion secondary batteries and the lithium ion secondary batteries of Comparative Examples, respectively. The water used in the following Examples and Comparative Examples is ion exchanged water, unless otherwise specified.

### <Manufacturing of electrode binder polymer and electrode binder composition>

In each of Examples and Comparative Examples, respective monomers were mixed in their respective amounts (parts by mass) shown in Table 1, thereby manufacturing emulsions.

Then, an aqueous solution was prepared by dissolving a polymerization initiator in an amount (parts by mass) shown in Table 1 in 50 parts by mass of water.

Into a separable flask having a cooling tube, a thermometer, a stirrer, and a dropping funnel, 150 parts by mass of water was charged, and the temperature was raised to 80°C. To the separable flask, the monomer emulsion and the aqueous solution including the polymerization initiator dissolved therein were respectively continuously supplied with stirring at 80°C over 3 hours to effect emulsion polymerization, thereby obtaining emulsions including particles including the binder polymers of Examples 1 to 6, and Comparative Examples 1 to 3, and an aqueous medium.

The resulting emulsion was cooled to room temperature (25°C). Thereafter, 133 parts by mass of water and 25% by mass of ammonia water were added. As a result of this, the electrode binder compositions of Examples 1 to 6 and Comparative Examples 1 to 3 that were the emulsions in which the particles including the electrode binder polymer of Examples 1 to 6 and Comparative Examples 1 to 3 were dispersed in an aqueous medium were manufactured.

**[Table 1]**

| | | | Example 1 | Example 2 | Example 3 | Example 4 | Example 5 | Example 6 | Comparative Example1 | Comparative Example2 | Comparative Example3 |
|---|---|---|---|---|---|---|---|---|---|---|---|
| Monomer | 1 | AA | 15 | 15 | 15 | 15 | 15 | 15 | 15 | 15 | 15 |
| | | IA | 8.0 | 8.0 | 8.0 | 8 | 8 | 8 | 8 | 8 | 8 |
| | 2 | MOI-SM | 7.5 | | | | | 7.5 | | | |
| | | MOI-BP | | 7.5 | | | 7.5 | | | 7.5 | |
| | | MOI-BM | | | 7.5 | 38 | 7.5 | | | | 7.5 |
| | 3 | St | 195 | 195 | 195 | 171 | 191 | 195 | 195 | | |
| | 4 | 2-EHA | 164 | 164 | 164 | 150 | 160 | 164 | 164 | 164 | 164 |
| | | BzMA | | | | | | | | 195 | 195 |
| | | 2-HEMA | | | | 7.5 | | | | | |
| | 5 | DVB | 0.2 | 0.2 | 0.2 | 0.2 | 0.2 | | 0.2 | 0.2 | 0.2 |
| | Others | p-StSANa | 2.5 | 2.5 | 2.5 | 2.5 | 2.5 | 2.5 | 2.5 | 2.5 | 2.5 |
| | | KH-10 | 1.7 | 1.7 | 1.7 | 1.7 | 1.7 | 1.7 | 1.7 | 1.68 | 1.68 |
| Polymerization initiator | | Potassium persulfate | 1.0 | 1.0 | 1.0 | 1.0 | 1.0 | 1.0 | 1.0 | 1.0 | 1.0 |
| | | Rongalite SFS | 0.60 | 0.60 | 0.60 | 0.60 | 0.60 | 0.60 | 0.60 | 0.60 | 0.60 |
| Basic substance | | Ammonia | 17 | 17 | 17 | 17 | 17 | 17 | 17 | 17 | 17 |
| Aqueous medium | | Water | 583 | 583 | 583 | 583 | 583 | 583 | 583 | 583 | 58 3 |
| Electrode binder copolymer | | Tg (°C) | 7 | 8 | 7 | 13 | 11 | 7 | 8 | -9 | -5 |
| | | F1 (mmol/g) | 0.84 | 0.84 | 0.84 | 0.84 | 0.84 | 0.84 | 0.86 | 0.84 | 0.84 |
| | | F2 (mmol/g) | 0.062 | 0.076 | 0.079 | 0.40 | 0.15 | 0.062 | 0.00 | 0.076 | 0.079 |
| | | F2/F1 | 0.074 | 0.090 | 0.093 | 0.47 | 0.18 | 0.074 | 0.000 | 0.090 | 0.093 |

The abbreviations of monomers in Table 1 represent the following.
AA: Acrylic acid
IA Itaconic acid
St: Styrene
2-EHA: 2-Ehylhexylacrylate
BzMA: Benzyl methacrylate
2-HEMA: 2-Hdroxyethyl methacrylate
DVB: divinylbenzene
p-StSANa: Sodium p-styrenesulfonate
KH-10: Polyoxyethylene-1-(allyloxymethyl)alkyl ether sulfate ammonium salt (Aquarone KH-10, polymerizable surfactant, manufactured by DKS Co., Ltd.)

As a monomer 2, a compound having a methacryloyloxy group and a blocked isocyanato group was used. Specifically, the following were used.
MOI-SM: 2-[[[2-[(2-methyl-1-oxo-2-propen-1-yl)oxy]ethyl]amino]carbonyl]oxy]-methyl benzoate (KARENZ MOI-SM, (manufactured by Resonac Corporation))
MOI-BP: 2-[(3,5-dimethylpyrazolyl)carbonylamino]ethyl methacrylate (KARENZ MOI-BP, (manufactured by Resonac Corporation))
MOI-BM: 2-[0-(1'-methylpropylidenamino)carboxyamino]ethyl methacrylate (KARENZ MOI-BM (manufactured by Resonac Corporation))

Rongalite SFS in the polymerization initiator is the trade name of Rongalite manufactured by SUMITOMO SEIKA CHEMICALS CO., Ltd. The amount of ammonia as the basic substance shown in Table 1 is the amount of ammonia contained in aqueous ammonia (parts by mass). The amount of water as the aqueous medium shown in Table 1 is the total amount of water (parts by weight) contained in the electrode binder composition.

The content F1 of the first functional groups and the content F2 of the second functional groups in the electrode binder polymer were determined by the method described above.

### [Measurement of glass transition point Tg]

The binder compositions of Examples 1 to 6 or Comparative Examples 1 to 3 were applied onto a release PET (polyethylene terephthalate) film, and were dried at 50°C for 5 hours. In this manner, a film having a thickness of 2 mm was obtained.

Square specimens 2 mm in length and 2 mm in width were cut out from the obtained film. The specimen was sealed hermetically in an aluminum pan, and using a differential scanning calorimeter (EXSTAR DSC/SS7020, manufactured by Hitachi High-Tech Science Co., Ltd.) under a nitrogen gas atmosphere at a heating rate of 10°C/min, the differential scanning calorimetry (DSC) measurement of the specimen was performed. The temperature range for the DSC measurements was set at -40°C to 200°C. Then, the peak top temperature of the DSC chart obtained as a temperature differential of DSC was measured, and this temperature was referred to as the glass transition point Tg (°C) of the electrode binder polymer.

### <Evaluation of electrode binder>

### [Measurement of film breaking strength]

The electrode binder compositions manufactured in each of the Examples and Comparative Examples was applied onto a glass plate covered with a polypropylene sheet thereon, and was dried under atmospheric pressure and at 23°C absolute humidity of 10 g/m³ (relative humidity of 50% RH) for 5 days, followed by vacuum drying under 0.01 Mpa, or less, at 60°C for 12 hours, thereby forming a film having a thickness of 0.4 mm. The resulting film was peeled from the polypropylene sheet to prepare the following film (I) or (II).
(I) a film to be subjected to the measurement as it is after peeling from the polypropylene sheet
(II) a film left standing under atmospheric pressure at 110°C and at an absolute humidity of 10 g/m³ for 1 hour

The respective films obtained in (I) and (II) were punched into a length of 60 mm and a width of 10 mm, resulting in specimens. Incidentally, the atmospheric pressure is assumed to be 1013 hPa.

Each specimen was subjected to a tensile test using a precision universal testing machine, Autograph AG-20kNX, manufactured by Shimadzu Corporation, and the film breaking strength [MPa] was measured. The tensile direction is the longitudinal direction of the specimen. The chuck positions were set at two points: 5mm from the center in the longitudinal direction (positions 30mm from both sides parallel in the width direction) on each side. That is, the distance between the chucks was set to 10 mm. The tensile speed, namely, the test speed, was set at 100 mm/min. Incidentally, the tensile test was conducted under atmospheric pressure at 23°C at an absolute humidity of 10 g/m³ (relative humidity of 50 %RH).

The value obtained by dividing the maximum value of the load detected in the above test by the cross sectional area of 10 mm × 0.4 mm of the specimen is referred to as the film breaking strength of the electrode binder. Thus, (I) the film breaking strength S (23) [MPa] as it is after the film formation, and (II) the film breaking strength S (110) [MPa] after having been left standing at 110°C are shown in Table 2.

### <Manufacturing of lithium ion secondary battery>

Using each of the electrode binder compositions of Examples 1 to 6 and Comparative Examples 1 to 3, a negative electrode was manufactured in the following manner. Using the negative electrode, a lithium ion secondary battery that is each lithium ion secondary battery of Examples 1 to 6 and Comparative Examples 1 to 3 was manufactured.

### (Manufacturing of positive electrode)

Ninety four parts by mass of LiNi_{0.6}Mn_{0.2}Co_{0.2}O₂ as a positive electrode active material, 3 parts by mass of acetylene black as a conductive auxiliary, and 3 parts by mass of polyvinylidene fluoride as a binder were mixed, resulting in a mixture. To the resulting mixture, 50 parts by mass of N-methylpyrrolidone was added for further mixing, resulting in a positive electrode slurry.

As the positive electrode current collector, aluminum foil having a thickness of 15 µm was prepared. A positive electrode slurry was applied onto both sides of the positive electrode current collector by a direct roll method. The amount of the positive electrode slurry to be applied to the positive electrode current collector was adjusted such that the thickness of the positive electrode slurry after a roll-press treatment described later may become 125 µm per one surface.

The positive electrode slurry applied onto the positive electrode current collector was dried at 120°C for 5 minutes, and pressed by a roll press method using a roll press (press load 5t/cm, roll width 7 cm, manufactured by THANK-METAL Co., Ltd.), resulting in a positive electrode sheet having positive electrode active material layers on both sides of the positive electrode current collector. The resulting positive electrode sheet was cut into a rectangular shape 50 mm in length and 40 mm in width, and was provided with conductive tabs, resulting in a positive electrode.

### (Manufacturing of negative electrode)

As a negative electrode active material, 96.9 parts by mass of artificial graphite (G49, manufactured by Jiangxi Zichen Technology Co., Ltd.), 3.6 parts by mass of any of the electrode binder compositions manufactured in Examples 1 to 6 and Comparative Examples 1 to 3 (1.4 parts by mass of nonvolatile content (binder polymer)), and 60 parts by mass of a 2 mass% aqueous solution of CMC (carboxymethyl cellulose-sodium salt, SUNROSE MAC 500LC manufactured by NIPPON PAPER Chemicals CO., LTD.) were mixed, and further, 16 parts by mass of water was added, and the mixture was mixed using a planetary centrifugal mixer(ARE-310, manufactured by THINKY CORPORATION.), resulting in a negative electrode slurry (electrode slurry).

Copper foil having a thickness of 10 µm was prepared as the negative electrode current collector. The negative electrode slurry was applied onto both sides of the negative electrode current collector by the direct roll method. The amount of the negative electrode slurry to be applied to the negative electrode current collector was adjusted such that the thickness after a roll press treatment described later may become 170 µm per one surface.

The negative electrode slurry applied onto the negative electrode current collector was dried at 90°C for 10 minutes and was pressed by a roll press method using a roll press (press load 8 t/cm, roll width 7 cm, manufactured by THANK-METAL Co., Ltd.), resulting in a negative electrode sheet having negative electrode active material layers on both sides of the negative electrode current collector. The resulting negative electrode sheet was cut into a rectangular shape 52 mm in length and 42 mm in width, and was provided with conductive tabs, resulting in negative electrodes.

### (Manufacturing of Lithium ion secondary battery)

The positive electrode active material layer and the negative electrode active material layer were stacked so as to oppose each other with a separator (made of polyethylene, thickness 25 µm) including a polyolefin-based porous film interposed between the positive electrode and the negative electrode, and were accommodated in an exterior body (battery pack) including an aluminum laminated material. Subsequently, an electrolytic solution was poured into the exterior body, vacuum pressure impregnation was performed, and packing was performed by a vacuum heat sealer, resulting in a lithium ion secondary battery.

As the electrolytic solution, there was used the mixture of 99 parts by mass of solution obtained by dissolving LiPF₆ into a mixed solvent including ethylene carbonate (EC), ethyl methyl carbonate (EMC) and diethyl carbonate (DEC) in a volume ratio of EC: EMC: DEC = 30:50:20, at a concentration of 1.0 mol/L and 1 part by mass of vinylene carbonate.

### <Evaluation of non-aqueous secondary battery>

For the lithium ion secondary batteries of Examples 1 to 6 and Comparative Examples 1 to 3, respectively, the discharge capacity retention rate after 500 cycles, the discharge capacity retention rate after storage at 60°C for 4 weeks, and the internal resistance (DCR) increase rate after storage at 60°C for 4 weeks were evaluated by the methods shown below, respectively. The results are shown in Table 2.

### [Discharge capacity retention rate after 500 cycles]

Under the condition of 45°C, a charging-discharging was conducted with the following series of operations of steps (i) to (iv) shown below as one cycle. The time integration value of the current in the steps (i) and (ii) was referred to as the charge capacity, and the time integration value of the current in the step (iv) was referred to as the discharge capacity. Then, the discharge capacity at the first cycle and the discharge capacity at the 500 cycle were measured, and the discharge capacity retention rate after 500 cycles was calculated by the following equation. 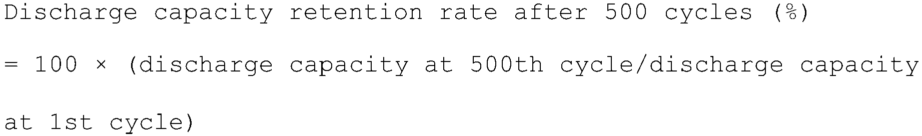 Discharge capacity retention rate after 500 cycles (%) = 100 × (discharge capacity at 500th cycle/discharge capacity at 1st cycle)

(i) Charging is performed with a current of 1 C until voltage becomes 4.2 V (constant current (CC) charging).
(ii) Charging is performed at a voltage of 4.2 V until the current becomes 0.05 C (constant voltage (CV) charging).
(iii) The battery is allowed to stand still for 30 minutes.
(iv) Discharging is performed with a current of 1 C until the voltage becomes 2.75 V (constant current (CC) discharging).

### [Discharge capacity retention rate after 60°C 4-week storage]

After CC charging is performed with a current of 1 C until the voltage becomes 4.2 V under the condition of 25°C, CV charging is performed until the current becomes 0.05 C. Then, CC discharging is carried out with a current of 1 C up to a voltage of 2.75 V, and the discharge capacity obtained at that time is defined as the discharge capacity before storage. After performing CC charging with a current of 1 C until a voltage of 4.2 V is reached again, CV charging is performed until the current reaches 0.05 C, resulting in a fully charged battery. The resulting fully charged battery was allowed to stand still under the condition of 60°C for 4 weeks. Then, CC discharging is performed under the condition of 25°C with a current of 1 C until the voltage reaches 2.75 V again, and the discharge capacity obtained at that time is defined as the discharge capacity after storage. From the discharge capacity before storage and the discharge capacity after storage, the discharge capacity retention rate after 60°C 4-week storage is calculated according to the following equation. $\begin{matrix}Discharge capacity retention rate \left(%\right) after 60 ° C 4 - week \\ storage \\ = 100 \times \left(\begin{matrix}discharge capacity after storage / discharge capacity \\ before storage\end{matrix}\right)\end{matrix}$

### [Internal resistance (DCR) increase rate after 60°C 4-week storage]

The internal resistance (DCR (Ω)) of the lithium ion secondary battery is measured under the condition of 25°C by the following procedure. That is, constant current charging/discharging was performed at 0.2 C from the rest potential up to a voltage of 3.6 V, and the charged state was set at 50% (SOC 50%) of the initial capacity. Thereafter, discharging was carried out for 60 seconds with each current value of 0.2 C, 0.5 C, 1 C, and 2 C. Incidentally, after each discharging, charging for returning to SOC 50% is performed. The internal resistance DCR (Ω) at a SOC of 50% was determined from the relationship between these four current values (values per second) and the voltages.

The internal resistances (DCR) obtained by the above procedure were measured by the following stages (1) and (2), respectively.
(1) Before storage for 4 weeks under the conditions of full charging and 60°C
(2) After storage for 4 weeks under the conditions of full charging and 60°C

The internal resistance (DCR) measured in (1) was referred to as pre-storage DCR, and the internal resistance (DCR) measured in (2) was referred to as post-storage DCR. The internal resistance (DCR) increase rate after 60°C 4-week storage was calculated according to the following equation. $\begin{matrix}Internal resistance \left(DCR\right) increase rate \left(%\right) after 60 ° C 4 - week \\ storage \\ = 100 \times \left(post-storage DCR/pre-storage DCR\right)\end{matrix}$

**[Table 2]**

| | | Example | Example2 | Example3 | Example4 | Example5 | Example6 | Comparative Example1 | Comparative Example2 | Comparative Example3 |
|---|---|---|---|---|---|---|---|---|---|---|
| Discharge capacity retention rate (%) | After 500 cycles | 76 | 77 | 76 | 76 | 76 | 76 | 75 | 74 | 74 |
| | After 60° C 4-week storage | 76 | 80 | 78 | 78 | 76 | 76 | 72 | 74 | 73 |
| DCR increase rate after 60°C 4-week storage (%) | | 115 | 112 | 113 | 112 | 115 | 115 | 128 | 125 | 126 |
| Film breaking strength (Mpa) | After being left standing at 23°C S(23) | 7.58 | 9.46 | 8.61 | 9.60 | 8.52 | 5.92 | 8.77 | 3.52 | 2.79 |
| | After being left standing at 110°C S (110) | 9.15 | 12.9 | 10.7 | 13.0 | 9.56 | 7.32 | 12.98 | 4.50 | 3.56 |

### <Evaluation results>

Each electrode binder polymer synthetized in Examples 1 to 6 has a first functional group, which is at least one selected from the group consisting of a carboxy group and a carboxy group forming a salt; and a second functional group, which is at least one selected from the group consisting of an isocyanato group and a blocked isocyanato group; and has a glass transition point Tg of -3°C or higher. In addition, any of the lithium ion secondary batteries manufactured by using the electrode binder polymers synthesized in Examples 1 to 6 maintains a sufficient discharge capacity retention rate even when stored at 60°C for 4 weeks, and an increase in DCR is also small.

For the lithium ion secondary battery of Comparative Example 1 which was manufactured using the electrode binder polymer having no second functional group, a decrease in the discharge capacity retention rate after storage at 60°C for 4-weeks was observed, and the increase in DCR was large. For the lithium ion secondary batteries of Comparative Example 2 and Comparative Example 3, which were manufactured using an electrode binder polymer with a low glass transition temperature Tg, although not remarkable as in Comparative Example 1, a decrease in discharge capacity retention after 60°C 4-week storage was observed, and an increase in DCR after 60°C 4-week storage was large.

From the above results, it can be said that an electrode binder polymer having a first functional group which is at least one selected from the group consisting of a carboxy group and a carboxy group forming a salt; and a second functional group which is at least one selected from the group consisting of an isocyanato group and a blocked isocyanato group, and having a glass transition point Tg of -3°C or higher can provide a secondary battery having excellent high-temperature storability.

Furthermore, the lithium ion secondary batteries of Examples 1 to 6 maintained a higher discharge capacity retention rate after 500 cycles as compared with the lithium ion secondary batteries of Comparative Examples 1 to 3.

Further, it is also found that the film manufactured by using each electrode binder polymer synthesized in Examples 1 to 6 has a significantly improved film breaking strength than that of the film manufactured by using each electrode binder polymer synthesized in Comparative Example 2 and Comparative Example 3. The electrode binder polymers synthesized in Examples 1 to 6 have a higher glass transition point Tg than those of the electrode binder polymers synthesized in Comparative Example 2 and Comparative Example 3.

From these results, t is considered that the breaking strength of the film manufactured by using the electrode binder polymer is changed largely depending on the glass transition point Tg of the electrode binder polymer, and the effect resulting from whether or not the glass transition point Tg is -3°C or higher is particularly large.

For this reason, it can also be said that an electrode binder polymer having a first functional group which is at least one selected from the group consisting of a carboxy group and a carboxy group forming a salt; and a second functional group which is at least one selected from the group consisting of an isocyanato group and a blocked isocyanato group, and having a glass transition point Tg of -3°C or higher can provide a film having a high breaking strength. As a result, it is considered that the increase in DCR after 60°C 4-week storage of an electrode including the electrode binder polymer is suppressed.

Further, by using an electrode binder polymer capable of forming a film having a high breaking strength, it is possible to expect the improvement of the strength of the electrode.

The disclosures of Japanese Patent Application No. 2023-214286, Japanese Patent Application No. 2024-188626 and Japanese Patent Application No. 2024-188627 are incorporated in the present description by reference in their entirety. All publications, patent applications, and technical standards referred to herein are incorporated by reference to the same extent as if each individual publication, patent application, and technical standard were specifically and individually indicated to be incorporated by reference.

## Claims

1. An electrode binder polymer comprising: a first functional group which is at least one selected from the group consisting of a carboxy group and a carboxy group forming a salt; and a second functional group which is at least one selected from the group consisting of an isocyanato group and a blocked isocyanato group, and having a glass transition point Tg of -3°C or higher.

2. The electrode binder polymer according to claim 1, wherein the glass transition point Tg is 50°C or lower.

3. The electrode binder polymer according to claim 1, wherein a content F1 of the first functional group is 0.20 mmol/g to 5.0 mmol/g.

4. The electrode binder polymer according to claim 1, wherein a content of F2 of the second functional group is 0.020 mmol/g to 2.0 mmol/g.

5. The electrode binder polymer according to claim 1, wherein a value of a ratio F2/F1 of the content F2 of the second functional group to the content F1 of the first functional group is 0.020 to 2.0.

6. The electrode binder polymer according to claim 1, having dispersibility in water.

7. An electrode binder comprising the electrode binder polymer according to any one of claims 1 to 6.

8. An electrode binder composition comprising the electrode binder polymer according to any one of claims 1 to 6 and an aqueous medium.

9. An electrode slurry comprising the electrode binder polymer according to any one of claims 1 to 6, an aqueous medium, and an electrode active material.

10. An electrode, comprising:
a current collector; and
an electrode active material layer including an electrode active material and the electrode binder polymer according to any one of claims 1 to 6.

11. A secondary battery comprising the electrode according to claim 10.

12. A method for manufacturing the electrode binder polymer according to any one of claims 1 to 6, the method comprising:
performing copolymerization using a compound having the first functional group and an ethylenically unsaturated bond, and a compound having the second functional group and an ethylenically unsaturated bond.

13. A method for manufacturing an electrode binder, the method comprising mixing the electrode binder polymer according to any one of claims 1 to 6.

14. A method for manufacturing an electrode binder composition, the method comprising mixing the electrode binder polymer according to any one of claims 1 to 6 and an aqueous medium.

15. A method for manufacturing an electrode binder composition, the method comprising mixing the electrode binder according to claim 7 and an aqueous medium.

16. A method for manufacturing an electrode slurry, the method comprising mixing the electrode binder polymer according to any one of claims 1 to 6, an electrode active material, and an aqueous medium.

17. A method for manufacturing an electrode slurry, the method comprising mixing the electrode binder according to claim 7, an electrode active material, and an aqueous medium.

18. A method for manufacturing an electrode slurry, the method comprising mixing the electrode binder composition according to claim 8 and an electrode active material.

19. A method of manufacturing an electrode, the method comprising: applying the electrode slurry according to claim 9 to at least a portion of a surface of a current collector for drying.
